# EUROPÄISCHE PATENTSCHRIFT

(11) **EP 1 387 617 B1**
(45) Veröffentlichungstag und Bekanntmachung des Hinweises auf die Patenterteilung: **13.04.2005**
(21) Anmeldenummer: 02735367.1
(22) Anmeldetag: 17.05.2002
(51) Int. Cl.: A22B 5/08

(54) **KONDENSATIONSBRÜHTUNNEL FÜR SCHLACHTTIERE**
CONDENSING SCALDING TUNNEL FOR SLAUGHTERED ANIMALS
TUNNEL D'EBOUILLANTAGE PAR CONDENSATION POUR ANIMAUX D'ABATTOIR

(30) Priorität: 18.05.2001 DE 10124396
(43) Veröffentlichungstag der Anmeldung: 11.02.2004
(73) Patentinhaber: Banss Schlacht- und Fördertechnik GmbH, 35216 Biedenkopf (DE)
(72) Erfinder: WEIDE, Harald, 35216 Biedenkopf (DE)
(74) Vertreter: Klunker . Schmitt-Nilson . Hirsch
(86) Internationale Anmeldenummer: PCT/EP2002/005487
(87) Internationale Veröffentlichungsnummer: WO 2002/098239

(56) Entgegenhaltungen:
- WO-A-98/32337
- US-A- 4 731 908
- US-A- 5 326 308

## Beschreibung

Die Erfindung bezieht sich auf einen Kondensationsbrühtunnel für Schlachttiere, aufweisend:
(a) eine sich in Längsrichtung des Brühtunnels erstreckende Brühzone, längs derer zu brühende Schlachttiere durch den Brühtunnel befördert werden können;
(b) eine sich in Längsrichtung des Brühtunnels erstreckende Bodenwanne, die mindestens einen Ablauf für in dem Brühtunnel kondensiertes Brühwasser aufweist;
(c) einen Zirkulationskanal oder mehrere Zirkulationskanäle längs des Brühtunnels mit gegenseitigem Abstand verteilt, der aufweist bzw. die jeweils aufweisen:
   - einen Eintritt im oberen Bereich des Brühtunnels;
   - einen Austritt im unteren Bereich des Brühtunnels;
   - ein zugeordnetes Gebläse zum Fördern eines Luftstroms durch den betreffenden Zirkulationskanal; und
   - eine Anzahl von Düsen zum Einblasen von heißem Wasserdampf in den Luftstrom.

Ein derartiger Kondensationsbrühtunnel ist aus der US4731908 bekannt. Bei dem bekannten Brühtunnel hat man sich damit zufriedengegeben, den heißen Wasserdampf enthaltenden Luftstrom in sinnvoller Strömungsmenge und Temperatur in irgendeiner Weise in die Brühzone einzublasen. Es herrschte die Vorstellung, dass sich der eingeblasene Luftstrom schon irgendwie hinreichend gleichmäßig mit der in der Brühzone vorhandenen Luft vermischen werde.

Der Erfindung liegt die Aufgabe zugrunde, einen Kondensationsbrühtunnel der eingangs genannten Art mit für das Brühergebnis günstigerer Einbringung der heißen, feuchten Luft aus dem Zirkulationskanal in die Brühzone verfügbar zu machen.

Zur Lösung dieser Aufgabe ist der Kondensationsbrühtunnel dadurch gekennzeichnet,
dass bei mindestens einem Zirkulationskanal die folgenden Merkmale vorgesehen sind:
(d) Der Zirkulationskanal mündet seitlich in die Bodenwanne;
(e) in der Bodenwanne ist eine Strömungsleitfläche angeordnet, mit der sich der aus dem Zirkulationskanal austretende Luftstrom auf eine Länge in der Bodenwanne verteilen lässt, die größer als die in Längsrichtung der Bodenwanne gemessene Dimension des Zirkulationskanals am Austritt ist;
(f) mindestens ein Teil der Strömungsleitfläche ist hinsichtlich seiner Positionierung in der Bodenwanne einstellbar.

Der erfindungsgemäße Brühtunnel ist so ausgebildet, dass die aus dem Zirkulationskanal bzw. den Zirkulationskanälen austretende, heiße, feuchtigkeitsbeladene Luft in in Längsrichtung der Brühzone verteilter Form von unten her der Brühzone zuströmt. Dies führt dazu, dass die längs der Brühzone geförderten Schlachttiere längs der Brühzone weitgehend gleichbleibende Temperaturund Feuchtigkeitsbedingungen vorfinden (wenn man nicht mit Absicht einen Temperatur- oder Feuchtegradienten längs der Brühzone einstellt); hierdurch wird ein besseres Brühergebnis erzielt. Es erscheint möglich, bei konstanter Brühtunnellänge die Fördergeschwindigkeit der Schlachttiere zu erhöhen oder bei konstanter Fördergeschwindigkeit der Schlachttiere die Brühtunnellänge zu verkleinern, ohne gegenüber dem heutigen Standard der Brühqualität eine Verschlechterung hinnehmen zu müssen.

Kondensationsbrühtunnel arbeiten nach dem Grundprinzip, einem zirkulierten Luftstrom durch Einblasen von heißem Wasserdampf sowohl Feuchtigkeit als auch Wärme zuzuführen. Es wird so viel an Wärme zugeführt, dass an den Schlachttieren die optimale Brühtemperatur (in der Regel etwas unterhalb von 60°C) herrscht. In Bezug auf die gewünschte Temperatur der Schlachttierkörper ist die Luft mit Wasserdampf übersättigt, so dass ein Teil der Feuchtigkeit an den Schlachttieren (aber auch an den Wänden der Brühzone) kondensiert und dadurch eine sehr intensive Wärmeübertragung auf die Schlachttiere stattfindet. Die Wärmeübertragung ist näher am Zuführende des Brühtunnels naturgemäß größer als weiter innen im Brühtunnel, weil die frisch eingeförderten Schlachttiere noch sehr erheblich unterhalb der Brühtemperatur sind und deshalb mehr Wasser an ihnen auskondensiert. Das an den Schlachttieren auskondensierende Wasser läuft an den Schlachttieren hinab und nimmt Schmutz von den Schlachttierkörpern nach unten mit.

Die Einstellbarkeit der Positionierung der Strömungsleitflächen lässt sich einerseits im Herstellerwerk des Brühtunnels nutzen, z.B. Variieren der Einstellung in Abhängigkeit davon, wie groß die Länge des Brühtunnels bzw. der Abstand zwischen mehreren Zirkulationskanälen des Brühtunnels ist. Sie lässt sich aber auch im Schlachthof nach Lieferung des Brühtunnels nutzen, z.B. um eine möglichst gute Anpassung an die lokalen Gegebenheiten oder auch an Ergebnisse eines Probebetriebs zu bewerkstelligen. So wird z.B. in einem Schlachthof, der überwiegend kleinere und leichtere Schlachttiere verarbeitet, eine andere Einstellung günstiger sein als bei einem anderen Schlachthof.

Als in dem erfindungsgemäßen Brühtunnel zu brühende Schlachttiere kommen besonders bevorzugt Schweine in Frage. Man kann aber auch andere Schlachttiere verarbeiten, die üblicherweise gebrüht werden und in den meisten Fällen vor der späteren Zerlegung nicht enthäutet werden.

Vorzugsweise sind bei dem Brühtunnel bei allen Zirkulationskanälen die oben angegebenen Merkmale (d), (e) und (f) vorgesehen. Es gibt aber auch Fälle, bei denen man bei einem Teil der Zirkulationskanäle weniger perfekt arbeiten kann, z.B. auf die Einstellbarkeit der Positionierung der Strömungsleitfläche verzichten kann.

Es ist besonders bevorzugt, wenn durch die Einstellung mindestens eines Teils der Strömungsleitfläche die Höhe des Strömungsquerschnitts zwischen einem unteren Rand der Strömungsleitfläche und dem Boden der Bodenwanne änderbar ist. Je kleiner man die Höhe des Strömungsquerschnitts einstellt, desto mehr der feuchtigkeitsbeladenen Luft wird mehr in Längsrichtung der Bodenwanne strömen. Es wird ausdrücklich betont, dass die genannte Höhe des Strömungsquerschnitts nicht längs der Bodenwanne konstant sein muss (also der untere Rand der Strömungsleitfläche nicht parallel zur Bodenwanne verlaufen muss). Es ist zuweilen sogar von Vorteil, diese Höhe in Längsrichtung der Bodenwanne gezielt zu variieren, z.B. unmittelbar gegenüber dem Austritt des Zirkulationskanals eine geringere Höhe zu haben als in einem Längsrichtung-Abstand von dem Austritt des Strömungskanals. Insofern wird bei den Ansprüchen, in denen es um die Höhe des Strömungsquerschnitts bzw. den Abstand zwischen dem Rand der Strömungsleitfläche und der Bodenwanne geht, ein gemittelter Wert dieser Höhe bzw. dieses Abstands betrachtet.

Vorzugsweise ist die Strömungsleitfläche insgesamt ein haubenartiges Gebilde, welches mit einem ersten Längsrand an die Bodenwanne anschließt und mit einem zweiten Längsrand beabstandet von dem Boden der Bodenwanne endet. Es ist ganz besonders bevorzugt, wenn die Strömungsleitfläche in einem Schnitt des Brühtunnels quer zu seiner Längserstreckung betrachtet, eine bogenartig gekrümmte Form hat. "Bogenartig gekrümmt" kann exakt oder im Wesentlichen kreisbogenförmig sein, muss es aber nicht.

Vorzugsweise besteht die Strömungsleitfläche im Wesentlichen aus Blech, insbesondere rostfreiem Stahlblech.

Vorzugsweise ist zur Einstellbarkeit mindestens eines Teils der Strömungsleitfläche eine Schraubverbindung (zu einem anderen Teil der Strömungsleitfläche oder zu einer Halterung der gesamten Strömungsleitfläche) vorgesehen, die lösbar ist und bei unterschiedlichen Positionierungen festziehbar ist. Hierfür gibt es eine ganze Reihe konstruktiver Möglichkeiten, insbesondere Schraubbolzen mit Langloch, Schraubbolzen mit einer Bohrungsreihe, Klemmung zwischen zwei Anpressteilen. Andere konstruktive Alternativen sind möglich, z.B. Klemmung mit Federkraft, sowohl mit formschlüssiger Rastungsreihe für diskrete Positionierungen als auch ohne Derartiges.

Vorzugsweise hat die Bodenwanne einen trapezförmigen Querschnitt mit im Wesentlichen vertikalen seitlichen Begrenzungen und einem Boden, der zu einer Seite hin schräg abwärts verläuft. Diese Geometrie der Bodenwanne führt dazu, dass ein besonders großer freier Querschnitt zur Verfügung steht (der problemlos zum Teil für die Luftstromverteilung über einen Teil der Länge der Bodenwanne genutzt werden kann) und dass die Abführung des kondensierten Brühwassers aus der Bodenwanne sich besonders effektiv und gründlich abspielt.

Vorzugsweise verläuft - im Querschnitt betrachtet - der Boden der Bodenwanne zu einer Seite der Bodenwanne hin schräg abwärts und ist mindesten ein Bodenablauf am Übergang zwischen dem tiefen Rand des Bodens und der seitlichen Begrenzung der Bodenwanne vorgesehen. Diese Ausbildung des Bodens und des Bodenablaufs ergeben eine besonders effektive und gründliche Wasserabfuhr. Wenn über die Länge der Bodenwanne mehrere Bodenabläufe vorhanden sind, ist es möglich, aber nicht zwingend erforderlich, ein Gefälle des Bodens der Bodenwanne in Längsrichtung jeweils zum betreffenden Bodenablauf hin vorzusehen.

Vorzugsweise ist der Brühtunnel dadurch gekennzeichnet, dass - im Querschnitt quer zur Längserstreckung des Brühtunnels gesehen - eine linke Reihe und eine rechte Reihe oberer Querträger, die in Längsrichtung des Brühtunnels beabstandet sind, und untere Querträger, die in Längsrichtung des Brühtunnels beabstandet sind, vorgesehen sind; und dass die Bodenwanne auf den oberen und unteren Querträgern gelagert ist. Dieses Gerippe aus Querträgern kann z.B. durch aufrechte Stützen auf dem Boden des Schlachthofs abgestützt sein. Sowohl die Querträger als auch ggf. die Stützen bestehen typischerweise aus Stahlprofilen.

Der Brühtunnel ist vorzugsweise dadurch gekennzeichnet, dass zur Lagerung von Querträgern dienende, in Längsrichtung des Brühtunnels beabstandete Stützen vorgesehen sind; dass - im Querschnitt quer zur Längserstreckung des Brühtunnels betrachtet - links und rechts Begrenzungswände der Brühzone vorgesehen sind; dass die Begrenzungswände unten auf Längsprofilen ruhen, die an den Querträgern befestigt sind; und dass die Begrenzungswände in der unteren Stirnseite einen Längsschlitz aufweisen, in den mit Spiel jeweils ein aufragender Rand der Bodenwanne greift.

Diese Art der Anbringung der Begrenzungswände der Brühzone entkoppelt Begrenzungswände von dem unmittelbaren Kontakt mit den zwei Längsrandbereichen der Bodenwanne. Wärmedehnungen und Wärmekontraktionen der Begrenzungswände sind unabhängig von der Bodenwanne möglich. Außerdem ergibt sich (Längsschfitz/aufragender Rand der Bodenwanne) oder ist möglich eine einfachere, gute Dichtung zwischen dem unteren Endbereich der betreffenden Begrenzungswand und der Bodenwanne. Es wird darauf hingewiesen, dass auf jeder Seite die Begrenzungswand aus mehreren, in Längsrichtung des Brühtunnels aneinander anschließenden Abschnitten bestehen kann. Vorzugsweise sind die Begrenzungswände in wärmeisolierender Konstruktion ausgeführt, insbesondere Verbundplatte mit Schaumkunststoff zwischen metallischen Deckplatten.

Vorzugsweise weist der Brühtunnel eine Einrichtung zum Einspritzen von flüssigem Wasser in den Luftstrom auf. In diesem Fall wird also ein Teil des insgesamt einzubringenden Wassers in flüssiger Form eingebracht und ein anderer Teil in dampfförmiger Form. Auf diese Weise lassen sich Feuchtigkeit und Temperatur in der Brühzone präziser steuern.

Vorzugsweise weist der Brühtunnel eine Einrichtung zum Erhöhen des Drucks des flüssigen Wassers zum Einspritzen auf. Bei einem Druck, der oberhalb des Drucks öffentlicher Wasserleitungsnetze liegt, läßt sich das flüssige Wasser in sehr fein vernebelter Form einspritzen. Außerdem wird man von Druckschwankungen und lokalen Druckunterschieden des öffentlichen Wasserleitungsnetzes frei.

Vorzugsweise weist der Brühtunnel ein System zum Erzeugen von heißem Wasserdampf auf, an das die Düsen zum Einblasen von heißem Wasserdampf in den Luftstrom angeschlossen sind. Dies ist in aller Regel günstiger als etwa die Zufuhr von heißem Wasserdampf zu dem Brühtunnel von einer separaten Erzeugungsstelle her, wiewohl letzteres alternativ möglich ist.

Vorzugsweise weist der Brühtunnel eine Einrichtung zum Regeln der Menge des in den Luftstrom eingeblasenen Wasserdampfs auf; besonders bevorzugt ein Regeln der Wasserdampfmenge nach Maßgabe der Temperatur in der Brühzone des Brühtunnels. Die Menge des pro Zeiteinheit in den Luftstrom eingeblasenen Wasserdampfs ist ein optimales Mittel zum Regeln der Temperatur in der Brühzone.

Vorzugsweise weist das Wasserdampf-Erzeugungssystem bzw. die Speisung des Wasserdampf-Erzeugungssystems mit Wasser eine Einrichtung zur Wasserenthärtung auf. Enthärtetes Wasser führt zu einem besseren Brühergebnis, ganz zu schweigen von der Reduzierung von Verkalkungserscheinungen im Wasserdampf-Erzeugungssystem und an den Düsen.

Vorzugsweise weist der Brühtunnel eine Einrichtung zum Verwirbeln und Zentrieren der Luftströmung in der Brühzone des Brühtunnels auf. Dies schafft gleichmäßigere und intensiveren Wärmeübertragungsbedirigungen von der Luftströmung zu den Schlachttieren.

Die in den Ansprüchen 12 bis 16 angegebenen Vorzugsmerkmale sind vorzugsweise bei allen Zirkulationskanälen verwirklicht. Es gibt jedoch Ausführungsfälle, bei denen es ausreicht, nur bei einem Teil der Zirkulationskanäle derart zu verfahren.

Die Erfindung und Ausgestaltungen der Erfindung werden nachfolgend anhand eines zeichnerisch dargestellten Ausführungsbeispiels noch näher erläutert. Es zeigt:
- Fig. 1: einen Kondensationsbrühtunnel im Querschnitt quer zur Längserstrekkung des Brühtunnels;
- Fig. 2: den unteren Endbereich des Brühtunnels von Fig. 1 in größerem Maßstab;
- Fig. 3: einen Teil des Brühtunnels von Fig. 1 in einer Blickrichtung des Pfeils III in Fig. 1.

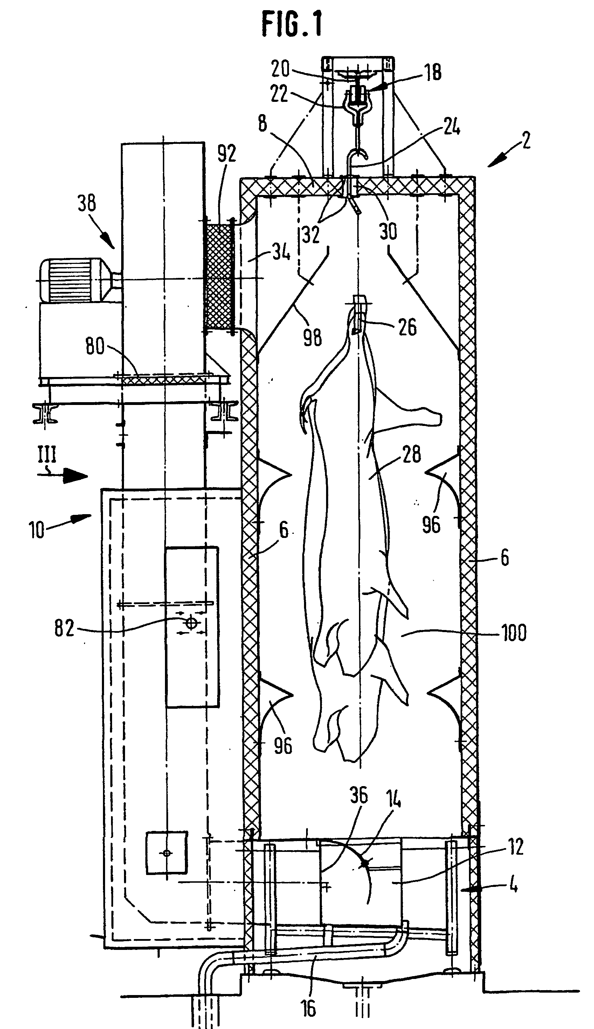

Der in Fig. 1 dargestellt Kondensationsbrühtunnel 2, im Folgenden kurz "Brühtunnel" genannt, hat als die wesentlichsten Bestandteile:
- ein tragendes Gestell 4;
- aufrechte, seitliche Begrenzungswände 6;
- eine Begrenzungsdecke 8;
- einen Zirkulationskanal 10;
- eine Bodenwanne 12;
- mindestens eine Strömungsleitfläche 14;
- eine Verwirbelungs- und Zentriereinrichtung für die Luftströmung in der Brühzone;
- und mindestens einen Ablauf 16.

Außerdem ist dem Brühtunnel 2 ein oberer Förderer 18 zugeordnet. Der Förderer 18 weist einen Längsträger 20, eine Reihe von auf Rollen längs des Längsträgers 20 bewegbaren Katzen 22, jeweils einen Transporthaken 24 hängend an der betreffenden Katze 22, und jeweils eine Schlingkette 26 hängend an dem betreffenden Haken 24 auf. An jeder Schlingkette 26 kann mit einem Hinterbein angehängt ein Schwein 28 kopfunten hängen. Der Haken 24 durchgreift einen Längsschlitz 30 in der oberen Begrenzung 8, und bürstenartige Dichtungen 32 dichten den Längsschlitz 30 ab, ohne die Bewegung des Haken 24 längs des Längsschlitzes 30 zu verhindern. Eine angetriebene Transportkette zum Fördern der Katzen 22 längs des Längsträgers 20 ist nicht eingezeichnet.

Längs des Brühtunnels 2 kann ein Zirkulationskanal 10 oder - insbesondere bei längeren Brühtunneln 2 - mehrere Zirkulationskanäle 10 mit gegenseitigem Abstand vorgesehen sein. Analoges gilt für den Ablauf 16, wobei selbst bei kürzeren Brühtunneln 2 in der Regel mehrere Abläufe 16 vorgesehen sind und wobei der Abstand der Abläufe 16 keineswegs mit dem Abstand der Zirkulationskanäle 10 übereinstimmen muss.

Der Zirkulationskanal 10 bzw. jeder Zirkulationskanal 10 weist als wichtigste Bestandteile auf:
- einen Eintritt 34 im oberen Bereich der betreffenden Wand 6 des Brühtunnels 2;
- einen Austritt 36 in einer seitlichen Begrenzung der Bodenwanne 12;
- ein zugeordnetes Gebläse 38 zum Fördern eines Luftstroms durch den Zirkulationskanal 10;
- eine Anzahl von Düsen 84 zum Einblasen von heißem Wasserdampf in den durch den Zirkulationskanal 10 strömenden Luftstrom.

Die Hauptlänge des Zirkulationskanals 10 ist vertikal, parallel außerhalb einer der Begrenzungswände 6. Vom Eintritt 34 geht der Kanal 10 zunächst ein Stück waagerecht. Dort sitzt dann das Gebläse 38. Unten gibt es eine Umlenkung zu einem im Wesentlichen waagerechten Endabschnitt mit dem Austritt 36 am Ende. Der beschriebene Zirkulationskanal 10 befindet sich also hauptsächlich außerhalb der sonstigen Umgrenzung des Brühtunnels 2, und zwar normalerweise auf der Rückseite des Brühtunnels 2, während sich in Fig. 1 rechts von dem Brühtunnel 2 normalerweise ein von Personen begehbarer Gang des Schlachthofs befindet.

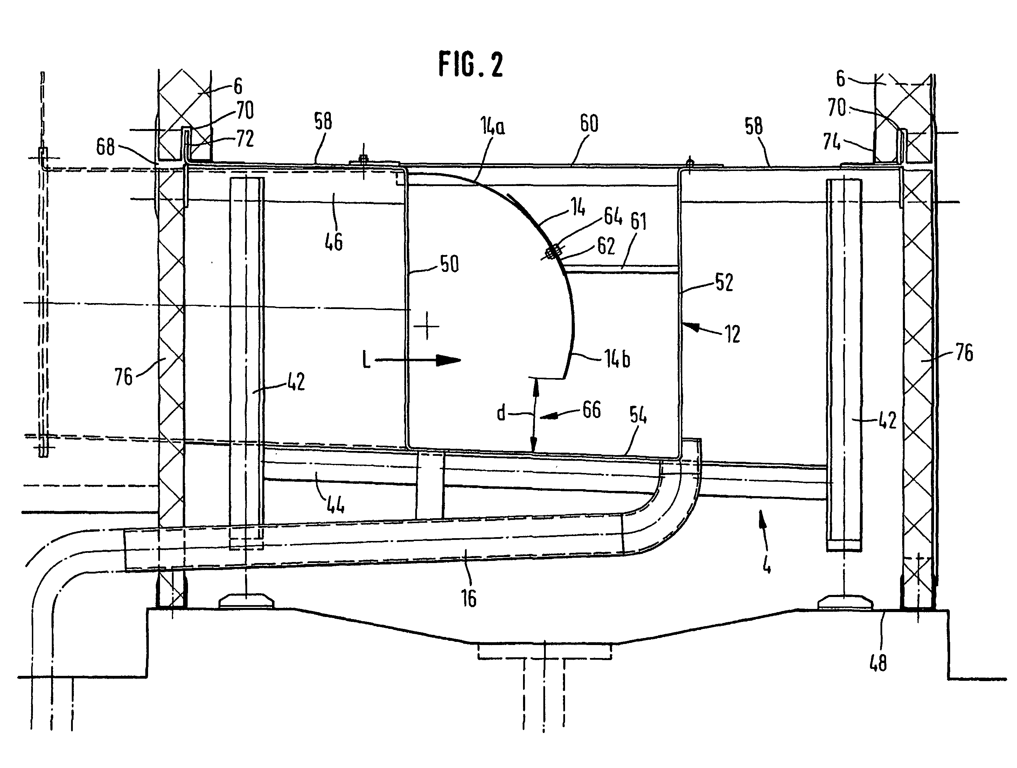

Besonders deutlich in Fig. 2 sieht man den Aufbau des Gestells 4. Das Gestell 4 weist als die wesentlichsten Bestandteile eine - in der Blickrichtung der Fig. 2 - linke Reihe und rechte Reihe von aufrechten Stützen 42, eine Reihe von unteren Querträgern 44 und eine linke Reihe und eine rechte Reihe von oberen Querträgern 46 auf. Die unteren Querträger 44 und die oberen Querträger 46 sind an den Stützen 42 z.B. durch Schweißung befestigt. Die Stützen 42, die unteren Querträger 44 und die oberen Querträger 46 sind jeweils aus Stahlprofil hergestellt. Die Stützen 42 stehen unten auf dem Schlachthofboden 48.

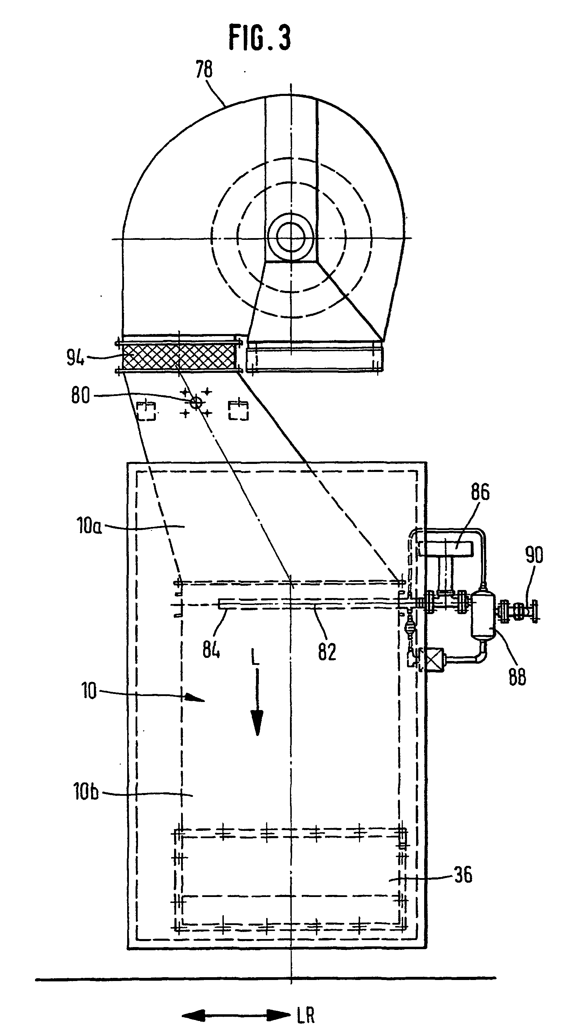

Ebenfalls in Fig. 2 erkennt man besonders deutlich die Bodenwanne 12. Der in Fig. 2 zwischen links außen und rechts außen befindliche, mittlere Bereich der Bodenwanne 12, der im vorliegenden Anmeldungstext häufig als die (eigentliche) Bodenwanne 12 angesprochen ist, hat einen trapezförmigen Querschnitt mit im Wesentlichen vertikalen seitlichen Begrenzungen 50 und 52, einem Boden 54, der von links nach rechts in Fig. 2 leicht schräg abwärts verläuft, und einem waagerechten oberen Ende. Oben rechts und links schließt sich jeweils ein nahezu waagerechter Abschnitt 58 mit Gefälle zur Bodenwanne 12 an, wodurch die Bodenwanne 12 (im weiteren Sinn) komplettiert wird. An der Oberseite der eigentlichen Bodenwanne 12 befindet sich ein nach oben schwenkbares Gitter 60 mit Durchtrittsschlitzen und/oder Durchtrittslöchern, die einen Großteil seiner Fläche einnehmen. Die Bodenwanne 12 besteht aus rostfreiem Stahlblech. Der bereits beschriebene Austritt 36 des Zirkulationskanals 10 erstreckt sich über die gesamte Höhe der seitlichen Begrenzung 50 der Bodenwanne 12, könnte aber auch weniger hoch sein. Die Längserstreckung des Austritts 36, gemessen rechtwinklig zur Zeichnüngsebene der Fig. 2 und damit gemessen in Längsrichtung der Bodenwanne 12, ist bei dem gezeichneten Ausführungsbeispiel gut doppelt so groß wie die Höhe des Austritts 36, siehe Fig. 3, könnte aber durchaus noch länger sein.

Innerhalb des trapezförmigen Raums im mittleren Bereich der Bodenwanne 12 ist austrittsseitig von dem Austritt 36 die Strömungsleitfläche 14 angeordnet. Die Strömungsleitfläche 14 hat eine Länge, gemessen rechtwinklig zur Zeichnungsebene der Fig. 2, die im wesentlichen gleich groß oder größer ist als die in gleicher Richtung gemessene Länge des Austritts 36. Die Strömungsleitfläche 14 weist einen oberen Teil 14a, der ortsfest ist, und einen unteren Teil 14b auf, der relativ zu dem Teil 14a einstellbar ist. In der gezeichneten Einstellung hat die Strömungsleitfläche 14 insgesamt im Wesentlichen die Form eines etwa 110°-Kreisbogens, wobei der linke obere Rand der Strömungsleitfläche 14 an die Bodenwanne 12 anschließt (konkret auf dem dortigen Abschnitt 58 aufliegt und befestigt ist) und der rechte-untere Rand in einem Abstand d oberhalb des Bodens 54 der Bodenwanne 12 endet. Ferner erkennt man eine Halterungsstrebe 61, die an einer Abwinklung 62 eine Schraube 64 mit Mutter trägt. Mittels der Schraube 64 ist der rechte-untere Rand des oberen Teils 14a der Strömungsleitfläche 14 gehalten. Der untere Teil 14b der Strömungsleitfläche 14 ist z.B. durch ein Langloch oder durch eine Öffnungsreihe mittels der Schraube 64 an der Halterungsstrebe 60 befestigt, und zwar in einer Weise, dass mehrere Positionierungen des unteren Teils 14b relativ zu dem oberen Teil 14a möglich sind. Je nach Positionierung ist die Höhe d größer oder kleiner. Je größer die Höhe d ist, desto größer ist der Anteil der feuchten Luft L, die aus dem Austritt 36 direkt durch den offenen Strömungsquerschnitt 66 in den rechten, oben quasi offenen Teil des Zentralbereichs der Bodenwanne 12 ausströmt. Der nicht auf diese Weise direkt ausströmende Teil der Luft bewegt sich mehr in Längsrichtung der Bodenwanne 12 und tritt entweder vor dem vorderen Ende oder hinter dem hinteren Ende des Austritts 36 von links nach rechts in Fig. 2 in den nach oben hin freien Raum der Bodenwanne 12 aus, oder in Längsrichtung der Bodenwanne 12 nach vorn oder nach hinten. Es versteht sich, dass längs der Strömungsleitfläche 14 verteilt mehrere Halterungsstreben 61 vorgesehen sind.

Ferner erkennt man in Fig. 2, dass der Ablauf 16 an einer "Ecke" (im Querschnitt!) des Zentralbereichs der Bodenwanne 12 ansetzt, nämlich am Übergang zwischen dem tieferen Rand des Bodens 54 und der dortigen seitlichen Begrenzung 52. Diese "Ecke" ist nicht benachbart dem Austritt 36, sondern von dem Austritt 36 beabstandet, so dass die Bewegung des Luftstroms L das Abfließen von kondensiertem Brühwasser auf dem Boden 54 in den Ablauf 16 noch unterstützt. Man sieht in Fig. 2, dass der Anschluss des Ablaufs 16 an der "Ecke" der Bodenwanne 12 so ausgeführt ist, dass Wasser nicht nur nach unten in den Ablauf 16 laufen kann, sondern auch gleichsam waagerecht von links nach rechts in den Ablauf 16 übertreten kann. Abgesehen vom unmittelbaren Anschluss an die Bodenwanne 12 ist der Ablauf 16 als rundes Rohr ausgebildet, das an ein Abwassersystem angeschlossen ist.

Es wird ausdrücklich darauf hingewiesen, dass die beschriebene Einstellbarkeit des unteren Teils 14b der Strömungsleitfläche 14 relativ zu dem oberen Teil 14a nur eine von mehreren erfindungsgemäßen Möglichkeiten der Einstellbarkeit der Positionierung der Strömungsleitfläche ist. Eine andere Möglichkeit wäre insbesondere die winkelmäßige Verstellung der räumlichen Positionierung der Strömungsleitfläche. Besonders bevorzugt sind allerdings Einstellmöglichkeiten, bei denen der Abstand d vergrößert oder verkleinert wird.

Schließlich sieht man in Fig. 2 noch besonders deutlich eine bevorzugte Möglichkeit des Anschlusses zwischen den Begrenzungswänden 6 und dem Gestell 4. Sowohl links als auch rechts ist jeweils ein Längsprofil 68 vorgesehen, das an einer Reihe von oberen Querträgern 46 befestigt ist. In dem Längsprofil 68 ruht jeweils der untere Endbereich einer Begrenzungswand 6. Jede Begrenzungswand 6 hat in ihrer unteren Stirnseite einen Längsschlitz 70, in den mit Spiel ein aufragender Rand 72 eines Abschnitts 58 der Bodenwanne 12 ragt. Auf diese Weise ist ein Herausdrücken von kondensiertem Wasser aus dem Brühtunnel 2 an dieser Stelle unterbunden. Außerdem erkennt man einen inneren Abdeckwinkel 74 zum Abdecken des Übergangs zwischen dem inneren-unteren Endbereich der Begrenzungswand 6 und der Oberseite des Abschnitts 58 der Bodenwanne 12.

Schließlich erkennt man in Fig. 2 links und rechts jeweils eine Wand 76, welche das Gestell 4 nach außen abschließt. Jede Wand 76 ruht unten in einem auf dem Boden 48 des Schlachthofs befestigten Profil und geht oben in das Längsprofil 68 über.

In Fig. 3 sieht man einen Großteil des Zirkulationskanals 10 in anderer Blickrichtung. An den Ausgang des Gebläsegehäuses 78 ist ein Abschnitt 10a des Kanals 10 angeschlossen, der sich, von oben nach unten fortschreitend, in Längsrichtung LR des Brühtunnels 2 vergrößert. Nach unten schließt sich ein Abschnitt 10b an, der von oben nach unten gleichbleibenden Strömungsquerschnitt hat. Auch in Fig. 3 erkennt man den Austritt 36.

Oben im Abschnitt 10a ist ein Rohr 80 mit Austrittsöffnungen (Düsen) eingebaut. Dort wird flüssiges Wasser unter Überdruck in den Luftstrom L eingespritzt. Oben im Abschnitt 10b ist ein sich in der Längsrichtung LR des Brühtunnels 2 erstreckendes Rohr 82 mit Düsenöffnungen 84 eingebaut. Durch die Düsenöffnungen 84 wird heißer, unter Überdruck stehender Wasserdampf in den Luftstrom L eingeblasen.

Wenn man Fig. 3 betrachtet, befindet sich ein nicht eingezeichneter Dampferzeuger entweder in naher Zuordnung zu dem Brühtunnel 2 oder an einer davon entfernteren Stelle des Schlachthofs. Durch eine Rohrleitung 90 wird heißer Wasserdampf herangeführt. In einem Zirkulationsabscheider 88 wird auskondensiertes Wasser abgeschieden. Mittels einer Mengendosiereinrichtung 86 wird anschließend der Dampf, der den Zustand gesättigten Wasserdampfs hat, dem Rohr 82 mit den Düsenöffnungen 84 zugeführt. Die Mengendosiereinrichtung 86 ist von der Funktion her ein Ventil, welches linear öffnet und schließt nach Maßgabe der Temperatur, die in der Brühzone 100 gemessen wird. Wenn dort die Temperatur unterhalb der Solltemperatur ist, wird mehr Dampf eingeblasen, und umgekehrt.

Es ist eine nicht eingezeichnete Wasserenthärtungseinrichtung zur Enthärtung des Wassers für das Rohr 80 und/oder für den Wasserdampf vorgesehen.

Die kreuzschraffierten Bauteile 92 und 94 sind flexible Verbindungsabschnitte vor dem Gebläse 38 und hinter dem Gebläse 38.

In Fig. 1 sieht man zugespitzte Längsvorsprünge 96 an den Begrenzungswänden 6, und zwar an der rechten Begrenzungswand 6 zwei Längsvorsprünge 96 beabstandet übereinander und an der linken Begrenzungswand 6 zwei Längsvorsprünge 96 beabstandet übereinander. Bei jedem Längsvorsprung 96 ist die Unterseite konkav-abgerundet ausgeführt; die Oberseite verläuft schräg abwärts geneigt zur Längsmittelebene der Brühzone 100 hin. Durch die Längsvorsprünge 96 ist eine Einrichtung zum Verwirbeln und Zentrieren der Luftströmung in der Brühzone des Brühtunnels gebildet. Die Längsvorsprünge 96 lenken die in der Brühzone 100 von unten nach oben strömende, dampfbeladene Luftströmung mehr zur Mitte (zwischen links und rechts in Fig. 1) der Brühzone 100. Außerdem wird eine Verlängerung der Verweildauer der Luft in der Brühzone 100 und eine vergleichmäßigende Durchmischung erreicht. Außerdem sind oben Strömungsleitbleche 98 vorgesehen, welche eine Beruhigung der Einströmung in den Eintritt 34 bewirken.

## Patentansprüche

1. Kondensationsbrühtunnel für Schlachttiere, aufweisend:
(a) eine sich in Längsrichtung (LR) des Brühtunnels (2) erstreckende Brühzone (100), längs derer zu brühende Schlachttiere (28) durch den Brühtunnel (2) gefördert werden können;
(b) eine sich in Längsrichtung (LR) des Brühtunnels (2) erstreckende Bodenwanne (12), die mindestens einen Ablauf (16) für in dem Brühtunnel (2) kondensiertes Brühwasser aufweist;
(c) einen Zirkulationskanal (10) oder mehrere Zirkulationskanäle (10) längs des Brühtunnels (2) mit gegenseitigem Abstand verteilt, der aufweist bzw. die jeweils aufweisen:
- einen Eintritt (34) im oberen Bereich des Brühtunnels (2);
- einen Austritt (36) im unteren Bereich des Brühtunnels (2);
- ein zugeordnetes Gebläse (38) zum Fördern eines Luftstroms (L) durch den betreffenden Zirkulationskanal (10);
- und eine Anzahl von Düsen (84) zum Einblasen von heißem Wasserdampf in den Luftstrom (L),
**dadurch gekennzeichnet, dass** bei mindestens einem Zirkulationskanal (10) die folgenden Merkmale vorgesehen sind:
(d) der Zirkulationskanal (10) mündet seitlich in die Bodenwanne (12);
(e) in der Bodenwanne (12) ist eine Strömungsleitfläche (14) angeordnet, mit der sich der aus dem Zirkulationskanal (10) austretende Luftstrom (L) auf eine Länge in der Bodenwanne (12) verteilen lässt, die größer als die in Längsrichtung (LR) der Bodenwanne (12) gemessene Dimension des Zirkulationskanals (10) am Austritt (36) ist;
(f) mindestens ein Teil (14b) der Strömungsleitfläche (14) ist hinsichtlich seiner Positionierung in der Bodenwanne (12) einstellbar.

2. Kondensationsbrühtunnel nach Anspruch 1,
**dadurch gekennzeichnet, dass** bei allen Zirkulationskanälen (10) die Merkmale (d), (e) und (f) vorgesehen sind.

3. Kondensationsbrühtunnel nach Anspruch 1 oder 2,
**dadurch gekennzeichnet, dass** durch die Einstellung mindestens eines Teils (14b) der Strömungsleitfläche (14) die Höhe (d) des Strömungsquerschnitts zwischen einem unteren Rand der Strömungsleitfläche (14) und dem Boden (54) der Bodenwanne (12) änderbar ist.

4. Kondensationsbrühtunnel nach einem der Ansprüche 1 bis 3,
**dadurch gekennzeichnet, dass** die Strömungsleitfläche (14) insgesamt ein haubenartiges Gebilde ist, welches mit einem ersten Längsrand an die Bodenwanne (12) anschließt und mit einem zweiten Längsrand beabstandet von dem Boden (54) der Bodenwanne (12) endet.

5. Kondensationsbrühtunnel nach einem der Ansprüche 1 bis 4,
**dadurch gekennzeichnet, dass** die Strömungsleitfläche (14), in einem Schnitt des Brühtunnels (2) quer zu seiner Längserstreckung (LR) betrachtet, eine bogenartig gekrümmte Form hat.

6. Kondensationsbrühtunnel nach einem der Ansprüche 1 bis 5,
**dadurch gekennzeichnet, dass** die Strömungsleitfläche (14) im Wesentlichen aus Blech besteht.

7. Kondensationsbrühtunnel nach einem der Ansprüche 1 bis 6,
**dadurch gekennzeichnet, dass** zur Einstellbarkeit mindestens eines Teils (14b) der Strömungsleitfläche (14) eine Schraubverbindung (64) vorgesehen ist, die lösbar ist und bei unterschiedlichen Positionierungen festziehbar ist.

8. Kondensationsbrühtunnel nach einem der Ansprüche 1 bis 7,
**dadurch gekennzeichnet, dass** die Bodenwanne (12) einen trapezförmigen Querschnitt hat mit im Wesentlichen vertikalen seitlichen Begrenzungen (50, 52) und einem Boden (54), der zu einer Seite hin schräg abwärts verläuft.

9. Kondensationsbrühtunnel nach einem der Ansprüche 1 bis 8,
**dadurch gekennzeichnet, dass** - im Querschnitt betrachtet - der Boden (54) der Bodenwanne (12) zu einer Seite der Bodenwanne (12) hin schräg abwärts verläuft und dass mindestens ein Bodenablauf (16) am Übergang zwischen dem tiefen Rand des Bodens (54) und der seitlichen Begrenzung (52) der Bodenwanne (12) vorgesehen ist.

10. Kondensationsbrühtunnel nach einem der Ansprüche 1 bis 9,
**dadurch gekennzeichnet, dass** eine linke Reihe und eine rechte Reihe oberer Querträger (46), die in Längsrichtung (LR) des Brühtunnels (2) beabstandet sind, und untere Querträger (44), die in Längsrichtung (LR) des Brühtunnels (2) beabstandet sind, vorgesehen sind; und dass die Bodenwanne (12) auf den oberen und unteren Querträgern (46,44) gelagert ist.

11. Kondensationsbrühtunnel nach einem der Ansprüche 1 bis 10,
**dadurch gekennzeichnet, dass** zur Lagerung von Querträgern (46) dienende, in Längsrichtung des Brühtunnels (2) beabstandete Stützen (42) vorgesehen sind;
dass - im Querschnitt quer zur Längserstreckung (LR) des Brühtunnels (2) betrachtet - links und rechts Begrenzungswände (6) der Brühzone (100) vorgesehen sind;
dass die Begrenzungswände (6) unten auf Längsprofilen (68) ruhen, die an den Querträgern (46) befestigt sind;
und dass die Begrenzungswände (6) in der unteren Stirnseite einen Längsschlitz (70) aufweisen, in den mit Spiel jeweils ein aufragender Rand (72) der Bodenwanne (12) greift.

12. Kondensationsbrühtunnel nach einem der Ansprüche 1 bis 11,
**dadurch gekennzeichnet, dass** er eine Einrichtung (80) zum Einspritzen von flüssigem Wasser in den Luftstrom (L) aufweist.

13. Kondensationsbrühtunnel nach Anspruch 12,
**dadurch gekennzeichnet, dass** er eine Einrichtung zum Erhöhen des Drucks des flüssigen Wassers zum Einspritzen aufweist.

14. Kondensationsbrühtunnel nach einem der Ansprüche 1 bis 13,
**dadurch gekennzeichnet, dass** er ein System zum Erzeugen von heißem Wasserdampf aufweist, an das die Düsen (84) zum Einblasen von heißem Wasserdampf in den Luftstrom (L) angeschlossen sind.

15. Kondensationsbrühtunnel nach einem der Ansprüche 1 bis 14,
**dadurch gekennzeichnet, dass** er eine Einrichtung zum Regeln der Menge des in den Luftstrom (L) eingeblasenen Wasserdampfs aufweist.

16. Kondensationsbrühtunnel nach Anspruch 15,
**dadurch gekennzeichnet, dass** das Regeln der Wasserdampfmenge nach Maßgabe der Temperatur in der Brühzone (100) des Brühtunnels (2) erfolgt.

17. Kondensationsbrühtunnel nach einem der Ansprüche 1 bis 16,
**gekennzeichnet durch** eine Einrichtung zur Wasserenthärtung.

18. Kondensationsbrühtunnel nach einem der Ansprüche 1 bis 17,
**dadurch gekennzeichnet, dass** er eine Einrichtung (96) zum Verwirbeln und Zentrieren der Luftströmung in der Brühzone (100) des Brühtunnels (2) aufweist.

## Claims

1. A condensation scalding tunnel for carcasses, comprising:
(a) a scalding zone (100) which extends in the longitudinal direction (LR) of the scalding tunnel (2) and along which carcasses (28) to be scalded can be conveyed through said scalding tunnel (2);
(b) a floor trough (12) extending in the longitudinal direction (LR) of the scalding tunnel (2) and having at least one outlet (16) for scalding water condensing in said scalding tunnel (2);
(c) one or more circulation channels (10) distributed in mutually spaced apart manner along said scalding tunnel (2) and each including:
- an inlet (34) in the upper region of the scalding tunnel (2);
- an outlet (36) in the lower region of the scalding tunnel (2);
- an associated blower (38) for conveying an airflow (L) through the respective circulation channel (10);
- and a number of nozzles (84) for blowing hot steam into the airflow (L),
**characterized in that** the following features are present in at least one circulation channel (10):
(d) the circulation channel (10) opens laterally into the floor trough (12);
(e) the floor trough (12) has a flow guide surface (14) arranged therein by means of which the airflow (L) leaving the circulation channel (10) can be distributed along a length of the floor trough (12) which is greater than the dimension of the circulation channel (10) at the outlet (36) as measured in the longitudinal direction (LR) of the floor trough (12);
(f) at least part (14b) of the flow guide surface (14) is adjustable with regard to the positioning thereof in the floor trough (12).

2. A condensation scalding tunnel according to claim 1,
**characterized in that** said features (d), (e) and (f) are present in all of said circulation channels (10).

3. A condensation scalding tunnel according to claim 1 or 2,
**characterized in that**, by adjusting at least part (14b) of said flow guide surface (14), the height (d) of the cross-sectional area of flow is variable between a lower edge of the flow guide surface (14) and the floor (54) of the floor trough (12).

4. A condensation scalding tunnel according to any of claims 1 to 3,
**characterized in that** the flow guide surface (14) in its entirety is a hood-like structure adjoining the floor trough (12) at a first longitudinal edge thereof and terminating at a distance from the floor (54) of the floor trough (12) at a second longitudinal edge thereof.

5. A condensation scalding tunnel according to any of claims 1 to 4,
**characterized in that** the flow guide surface (14), as seen in a sectional view of the scalding tunnel (2) transversely of its longitudinal extension (LR), has an arc-like curved shape.

6. A condensation scalding tunnel according to any of claims 1 to 5,
**characterized in that** the flow guide surface (14) consists substantially of sheet metal.

7. A condensation scalding tunnel according to any of claims 1 to 6,
**characterized in that**, for adjustability of at least part (14b) of the flow guide surface (14), there is provided a screw-type connection (64) that is adapted to be released and adapted to be tightened in different adjustment positions.

8. A condensation scalding tunnel according to any of claims 1 to 7,
**characterized in that** the floor trough (12) is of trapezoidal cross-section having substantially vertical lateral confines (50, 52) and a floor (54) extending towards one side obliquely downwards.

9. A condensation scalding tunnel according to any of claims 1 to 8,
**characterized in that** -as seen in cross-section - the floor (54) of the floor trough (12) extends towards one side obliquely downwards and **in that** at least one floor outlet (16) is provided at the transition between the deep edge of the floor (54) and the lateral confine (52) of the floor trough (12).

10. A condensation scalding tunnel according to any of claims 1 to 9,
**characterized in that** there are provided a left-hand row and a right-hand row of upper crossbars (46) spaced apart in the longitudinal direction (LR) of the scalding tunnel (2), as well as lower crossbars (44) spaced apart in the longitudinal direction (LR) of the scalding tunnel (2); and **in that** the floor trough (12) is supported on said upper and lower crossbars (46, 44).

11. A condensation scalding tunnel according to any of claims 1 to 10,
**characterized in**
**that** supports (42) spaced apart in the longitudinal direction of the scalding tunnel (2) are provided for supporting crossbars (46);
**that** - as seen in a cross-sectional view transversely of the longitudinal extension (LR) of the scalding tunnel (2) - there are provided confining walls (6) of the scalding zone (100) on the left-hand and right-hand sides; that the confining walls (6) at the bottom thereof rest on longitudinal beams (68) attached to said crossbars (46);
and in that the confining walls (6), in the lower face side thereof, have a longitudinal slot (70) in which a respective upstanding edge (72) of the floor trough (12) engages with play.

12. A condensation scalding tunnel according to any of claims 1 to 11,
**characterized in that** it has a means (80) for injecting liquid water into the airflow (L).

13. A condensation scalding tunnel according to claim 12,
**characterized in that** it has a means for increasing the pressure of the liquid water for injection.

14. A condensation scalding tunnel according to any of claims 1 to 13,
**characterized in that** it has a system for generating hot steam, to which are connected the nozzles (84) for blowing hot steam into the airflow (L).

15. A condensation scalding tunnel according to any of claims 1 to 14,
**characterized in that** it has a means for regulating the quantity of steam blown into the airflow (L).

16. A condensation scalding tunnel according to claim 15,
**characterized in that** regulating the steam quantity is effected in accordance with the temperature in the scalding zone (100) of the scalding tunnel (2).

17. A condensation scalding tunnel according to any of claims 1 to 16,
**characterized by** a means for water softening.

18. A condensation scalding tunnel according to any of claims 1 to 17,
**characterized in that** it has a means for swirling and centering the airflow in the scalding zone (100) of the scalding tunnel (2).

## Revendications

1. Tunnel d'ébouillantage à condensation pour des animaux d'abattoir comportant :
(a) une zone d'ébouillantage (100), qui s'étend dans la direction longitudinale (LR) du tunnel d'ébouillantage (2) et le long de laquelle les animaux abattus devant être ébouillantés (28) peuvent être entraînés à l'intérieur du tunnel d'ébouillantage (2),
(b) une cuvette de sol (12), qui s'étend dans la direction longitudinale (LR) du tunnel d'ébouillantage (2) et possède au moins une évacuation (16) pour l'eau d'ébouillantage condensée dans le tunnel d'ébouillantage (2);
(c) un canal de circulation (10) ou plusieurs canaux de circulation (10) le long du tunnel d'ébouillantage (2), répartis à une distance réciproque et qui comporte(nt) respectivement :
- une entrée (34) située dans la partie supérieure du tunnel d'ébouillantage (2);
- une sortie (36) dans la partie inférieure du tunnel d'ébouillantage (2);
- un ventilateur associé (38) pour faire circuler un courant d'air (L) à l'intérieur du canal considéré de circulation (10);
- et un certain nombre de buses (84) pour injecter de la vapeur d'eau chaude dans le courant d'air (L),
**caractérisé en ce que** dans le cas d'au moins un canal de circulation (10), les caractéristiques suivantes sont prévues :
(d) le canal de circulation (10) débouche latéralement dans la cuvette de sol (12);
(e) dans la cuvette de sol (12) est disposée une surface de guidage d'écoulement (14), avec laquelle le courant d'air (L) qui sort du canal de circulation (10), peut se répartir dans la cuvette de sol (12) sur une longueur qui est supérieure à la dimension, mesurée dans la direction longitudinale (LR) de la cuvette de sol (12), du canal de circulation (10) à la sortie (36) ;
(f) que le positionnement d'au moins une partie (14b) de la surface de guidage d'écoulement (14) dans la cuvette de sol (12) est réglable.

2. Tunnel d'ébouillantage à condensation selon la revendication 1, **caractérisé en ce que** les caractéristiques (d), (e) et (f) sont prévues dans tous les canaux de circulation (10).

3. Tunnel d'ébouillantage à condensation selon la revendication 1 ou 2, **caractérisé en ce que** grâce au réglage d'au moins une partie (14b) de la surface de guidage d'écoulement (14), la hauteur (d) de la section transversale d'écoulement entre un bord inférieur de la surface de guidage d'écoulement (14) et le fond (54) de la cuvette de sol (12) peut être modifiée.

4. Tunnel d'ébouillantage à condensation selon les revendications 1 à 3, **caractérisé en ce que** la surface de guidage d'écoulement (14) est globalement une structure en forme de hotte, qui se raccorde par un premier bord longitudinal à la cuvette de sol (12) et se termine par un second bord longitudinal à distance du fond (54) de la cuvette de sol (12).

5. Tunnel d'ébouillantage à condensation selon l'une des revendications 1 à 4, **caractérisé en ce que** la surface de guidage d'écoulement (14) possède une forme cintrée arquée, vue dans une coupe du tunnel d'ébouillantage (2) transversalement par rapport à son étendue longitudinale (LR).

6. Tunnel d'ébouillantage à condensation selon l'une des revendications 1 à 5, **caractérisé en ce que** la surface de guidage d'écoulement (14) est réalisée essentiellement en tôle.

7. Tunnel d'ébouillantage à condensation selon l'une des revendications 1 à 6, **caractérisé en ce que** pour la possibilité de réglage d'au moins une partie (14b) de la surface de guidage d'écoulement (14), il est prévu une liaison à vis (64), qui est amovible et peut être serrée fermement dans des positionnements différents.

8. Tunnel d'ébouillantage à condensation selon l'une des revendications 1 à 7, **caractérisé en ce que** la cuvette de sol (12) possède une section transversale de forme trapézoïdale avec des limites latérales (50,52) sensiblement verticales et un fond (54), qui s'étend d'un côté obliquement vers le bas.

9. Tunnel d'ébouillantage à condensation selon l'une des revendications 1 à 8, **caractérisé en ce que** - vu en coupe transversale - le fond (54) de la cuvette de sol (12) s'étend obliquement vers le bas d'un côté de la cuvette de sol (12) et qu'au moins une évacuation de sol (16) est prévue au niveau de la jonction entre le bord profond du sol (54) et la limite latérale (52) de la cuvette de sol (12).

10. Tunnel d'ébouillantage à condensation selon l'une des revendications 1 à 9, **caractérisé en ce qu'**une rangée de gauche et une rangée de droite de supports transversaux supérieurs (46), qui sont distants dans la direction longitudinale (LR) du tunnel d'ébouillantage (2), et des supports transversaux inférieurs (44), qui sont distants dans la direction longitudinale (LR) du tunnel d'ébouillantage (2), sont prévus; et que la cuvette de sol (12) est montée sur les supports transversaux supérieur et inférieur (46,44).

11. Tunnel d'ébouillantage à condensation selon l'une des revendications 1 à 10, **caractérisé en ce que** des appuis (42), qui servent à supporter des supports transversaux (46) et sont distants dans la direction longitudinale du tunnel d'ébouillantage (2), sont prévus;
que des parois limites (6) de gauche et de droite - vues dans la coupe transversale par rapport à l'étendue longitudinale (LR) du tunnel d'ébouillantage (2) - de la zone d'ébouillantage (100) sont prévues;
que les parois limites (6) prennent appui, en bas, sur des profilés longitudinaux (68), qui sont fixés aux supports transversaux (46);
et que les parois limites (6) possèdent, dans la face frontale inférieure, une fente longitudinale (70), dans laquelle s'engage avec jeu respectivement un bord saillant (72) de la cuvette de sol (12).

12. Tunnel d'ébouillantage à condensation selon l'une des revendications 1 à 11, **caractérisé en ce qu'**il comporte un dispositif (80) pour pulvériser de l'eau liquide dans le courant d'air (L).

13. Tunnel d'ébouillantage à condensation selon la revendication 12, **caractérisé en ce qu'**il comporte un dispositif pour augmenter la pression de l'eau liquide pour la pulvérisation.

14. Tunnel d'ébouillantage à condensation selon l'une des revendications 1 à 13, **caractérisé en ce qu'**il comporte un système pour produire de la vapeur d'eau chaude, auquel sont raccordées les buses (84) servant à injecter de la vapeur d'eau chaude dans le courant d'air (L) .

15. Tunnel d'ébouillantage à condensation selon l'une des revendications 1 à 14, **caractérisé en ce qu'**il comporte un dispositif pour régler la quantité de la vapeur d'eau qui est injectée dans la courant d'air (L).

16. Tunnel d'ébouillantage à condensation selon la revendication 15, **caractérisé en ce que** la régulation de la quantité de vapeur d'eau s'effectue en fonction de la température dans la zone d'ébouillantage (100) du tunnel d'ébouillantage (2).

17. Tunnel d'ébouillantage à condensation selon l'une des revendications 1 à 16, **caractérisé par** un dispositif d'adoucissement d'eau.

18. Tunnel d'ébouillantage à condensation selon l'une des revendications 1 à 17, **caractérisé en ce qu'**il comporte un dispositif (96) pour faire tourbillonner et centrer le courant d'air dans la zone d'ébouillantage (100) du tunnel d'ébouillantage (2).
